(19) Europäisches Patentamt / European Patent Office / Office européen des brevets

(11) **EP 2 704 059 A1**

(12) **DEMANDE DE BREVET EUROPEEN**

(43) Date de publication:
**05.03.2014   Bulletin 2014/10**

(51) Int Cl.:
***G06K 9/00*** *(2006.01)*    ***G06F 3/01*** *(2006.01)*

(21) Numéro de dépôt: **13182695.0**

(22) Date de dépôt: **02.09.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité:  **31.08.2012   FR 1258167**

(71) Demandeurs:
• **Frejaville, Etienne Jean**
**78590 Noisy Le Roi (FR)**

• **Mercier, Gregoire Maurice Marcel**
**29217 Le Conquet (FR)**

(72) Inventeurs:
• **Frejaville, Etienne Jean**
**78590 Noisy Le Roi (FR)**
• **Mercier, Gregoire Maurice Marcel**
**29217 Le Conquet (FR)**

(74) Mandataire: **Lebkiri, Alexandre**
**Cabinet Camus Lebkiri**
**87 Rue Taitbout**
**75009 Paris (FR)**

(54) **Dispositif pour le déclenchement d'une instruction logicielle par detection d'un mouvement de rotation de tête**

(57)    Dispositif (10) pour déclencher une instruction logicielle, comportant :
- une caméra (15) pour capturer des images successives d'un utilisateur (14)
- des moyens de détection de visage (19) dudit utilisateur (14)
- des moyens d'enregistrement (27) des positions successives du visage (18)
- des moyens de détection de mouvements (22) dudit utilisateur (14), pour détecter :
o sur chaque image successive capturée, l'orientation d'un mouvement général de l'utilisateur (14) ;
o un mouvement de rotation aller, quand une perte de détection du visage (18) se produit ;
o un mouvement de rotation retour ;

- des moyens de déclenchement (23) d'une instruction logicielle lorsque :
o un mouvement de rotation aller et un mouvement de rotation retour ont été successivement détectés, et
o un nombre de mouvements généraux dans le sens aller, suivis d'un nombre de mouvements généraux dans le sens retour, ont été successivement détectés.

Fig. 5

**Description**

**DOMAINE TECHNIQUE DE L'INVENTION**

La présente invention concerne un dispositif pour le déclenchement d'une instruction logicielle par détection d'un mouvement de rotation de tête. Ce dispositif est particulièrement adapté à des situations dans lesquelles un utilisateur souhaite faire prendre des décisions binaires à un système, et que des moyens classiques de commande, tels une commande tactile ou vocale, sont inadaptés. C'est le cas par exemple d'un musicien jouant du piano, et souhaitant déclencher un changement de page d'une partition affichée sur une tablette numérique. En effet, dans le milieu musical en général, il est pratique de pouvoir faire défiler les pages d'une partition tout en gardant ses deux mains disponibles pour jouer d'un instrument. Cependant, le dispositif selon l'invention n'est pas limité au milieu musical, il peut également être utilisé dans un milieu industriel bruyant dans lequel un opérateur ayant les mains occupées souhaite faire prendre des décisions à un système, ou prendre connaissance d'une suite d'opérations à effectuer. De nombreuses autres applications sont envisageables : une cuisinière lisant une recette sur un ordinateur, et ayant les mains occupées ou gantées ; une personne handicapée souhaitant faire défiler les pages d'un livre numérique ; etc.

**ETAT DE LA TECHNIQUE ANTERIEUR**

On connaît des dispositifs pour le déclenchement d'une instruction logicielle par détection d'un mouvement de tête au moyen du suivi de la position des yeux d'un utilisateur. Dans ces dispositifs, la détection d'un mouvement de tête est souvent associée au suivi des personnes ou de l'estimation de la direction de leur regard. Ces approches (généralement désignées par le terme Facial Feature Tracking) s'orientent donc vers une détection explicite des yeux, voire du nez.

Dans ce type d'approche, la tête est constamment détectée, quelle que soit sa position (de face et de profil). Cela implique des extensions et des adaptations des méthodes de détection de visage usuelles, telles que les « haar-cascade », mais cela induit également une approche supervisée la plupart du temps ou une modélisation spatio-temporelle des formes. Selon certains senarii, les moyens d'acquisition sont adaptés à l'observation des visages de façon multi-angulaire, notamment en ayant recours à des réseaux de capteurs ou plus simplement à des systèmes de vision 3D. Par ailleurs, la détection des yeux, dont la qualité est déterminante dans ces approches, peut être facilitée en utilisant des moyens d'observation infrarouge.

Ces dispositifs présentent plusieurs inconvénients :

- Si certaines méthodes peuvent être mises en oeuvre en temps-réel, elles sont souvent implémentées sur des PC puissants ou même aidées par des implémentations sur GPU. Ainsi, la plupart de ces dispositifs ne peuvent pas être exécutés discrètement et ne permettent pas une implémentation à l'heure actuelle sur des tablettes numériques.
- Se baser sur la détection des yeux offre un risque quant à la localisation des yeux d'un individu, qui peut varier d'un individu à un autre : les yeux peuvent être plus ou moins écartés, plus ou moins à la même hauteur... De plus, les dispositifs peuvent ne pas fonctionner si l'utilisateur porte des lunettes noires, ou si des mèches de cheveux cachent en partie ses yeux.
- Certaines techniques optimisent la signature colorimétrique du visage de façon à rendre la détection et le suivi du visage plus robuste. Ainsi, les dispositifs peuvent être mis en défaut en fonction de la couleur de la peau de l'utilisateur, la présence de lunettes ou de barbe, etc.
- Les risques de défaillance du dispositif augmentent avec l'éloignement de l'utilisateur. En effet, la détection des yeux de l'utilisateur est plus difficilement réalisable.
- Un mouvement de tête est considéré comme ayant eu lieu lorsqu'un oeil n'est plus détecté : l'utilisateur doit donc tourner la tête d'au moins 45 degrés pour que son mouvement de tête soit détecté. Ce seuil n'est pas réglable, ce qui est contraignant pour l'utilisateur.

**DESCRIPTION GENERALE DE L'INVENTION**

L'objet de l'invention offre un dispositif robuste et générique pour le déclenchement d'une instruction logicielle par détection d'un mouvement de rotation tête, ne reposant pas sur la détection constante et précise du visage dans toutes ses phases de rotation.

L'invention concerne donc essentiellement un dispositif pour le déclenchement d'une instruction logicielle, comportant :

- une caméra fixe adaptée pour capturer des images successives d'un utilisateur situé dans le champ de ladite caméra ;
- des moyens de détection du visage dudit utilisateur lorsque ledit visage est positionné sensiblement face à la caméra ;

- des moyens de signalisation permettant d'indiquer en continu à l'utilisateur si son visage est détecté ;
- des moyens d'enregistrement des positions successives du visage détecté par les moyens de détection de visage ;
- des moyens de détection de mouvements dudit utilisateur, aptes à détecter :

    ○ sur chaque image successive capturée par la caméra, l'orientation d'un mouvement général de l'utilisateur ;
    ○ un mouvement de rotation de la tête de l'utilisateur dans un sens de rotation aller, dit mouvement de rotation aller, à partir du moment où une perte de détection du visage se produit ;
    ○ un mouvement de rotation de ladite tête dans un sens de rotation retour opposé au sens de rotation aller, dit mouvement de rotation retour ;

- des moyens d'enregistrement des orientations des mouvements généraux de l'utilisateur ;
- des moyens de déclenchement d'une instruction logicielle lorsque :

    ○ un mouvement de rotation aller et un mouvement de rotation retour ont été successivement détectés, et
    ○ au moins un premier nombre de mouvements généraux dans le sens de rotation aller, suivis d'au moins un deuxième nombre de mouvements généraux dans le sens de rotation retour, ont été successivement détectés.

Le dispositif selon l'invention s'appuie sur deux méthodes connues dans le domaine de la reconnaissance de forme et de la détection de mouvement :

- la détection de visage qui est utilisée ici pour détecter un visage de tout type positionné sensiblement face à la caméra, et dans de très larges conditions d'utilisation ;
- la détection de mouvement qui permet de détecter un mouvement dans une zone donnée de l'image, basée sur le principe de la détection de gradient lors d'un mouvement.

Le dispositif détecte ainsi en continu le visage de l'utilisateur, lorsque celui-ci est de face, ainsi que ses mouvements, grâce aux images issues de la caméra.

On note qu'on appelle « mouvement général » un mouvement de gradient maximal détecté dans la zone du visage.

Initialement, l'exécutant fait face à la caméra. Lorsque les moyens de signalisation confirment à l'utilisateur que son visage a bien été détecté par les moyens de détection de visage, il peut amorcer un mouvement de rotation aller. Les moyens de détection de visage ne détectant que les visages de face, une perte de détection du visage de l'utilisateur se produit lorsque l'angle de rotation de la tête atteint environ quinze degrés. Cette perte de détection peut, sous certaines conditions, indiquer qu'un mouvement de rotation aller est réalisé. De plus, à l'endroit où la perte de détection du visage a lieu, les gradients de vitesse maximaux horizontaux détectés indiquent que la rotation de la tête est en cours. Ils indiquent également une direction correspondant au sens de rotation aller. Lorsque la tête revient en position initiale, le mouvement de rotation retour est détecté de la même manière. Par ailleurs, la détection en continu de l'orientation des mouvements généraux de l'utilisateur sert à éviter une détection d'un mouvement de rotation insuffisamment franc : un nombre minimum de mouvements généraux dans le sens de rotation aller, suivi d'un nombre minimum de mouvements généraux dans le sens de rotation retour, doivent être enregistrés pour déclencher l'instruction logicielle.

On note que le dispositif s'affranchit de la morphologie des individus ou des accessoires qu'ils peuvent porter, et n'utilise pas la détection des yeux de l'utilisateur. De plus, le dispositif utilisant la détection de visage de face, l'angle de perte de détection de visage se produit lorsque l'utilisateur tourne sa tête d'un angle assez faible (de l'ordre de quinze degrés). De plus, des fausses détections sont limitées grâce à la nécessité de détecter un nombre minimum de mouvements généraux dans le sens de rotation aller, suivi d'un nombre minimum de mouvements généraux dans le sens de rotation retour, pour déclencher l'instruction logicielle. Enfin, le dispositif est implémentable sur une tablette numérique.

Outre les caractéristiques qui viennent d'être évoquées dans le paragraphe précédent, le dispositif selon l'invention peut présenter une ou plusieurs caractéristiques complémentaires parmi les suivantes, considérées individuellement ou selon toutes les combinaisons techniquement possibles :

- le dispositif est adapté pour déclencher un premier décompteur lorsqu'une perte de détection du visage de l'utilisateur se produit. Ceci sert à éviter les fausses détections correspondant à des mouvements de rotation trop lents. De plus, les mouvements détectés alors que le premier décompteur est expiré, ne sont pas pris en compte.

- les moyens de détection de visage sont inactifs tant que le premier décompteur n'est pas expiré. Ceci permet :

    ○ de ne pas recalculer prématurément une nouvelle position du visage qui perturberait le dispositif, et

○ d'améliorer les performances du dispositif.

- les moyens de détection de mouvements sont adaptés pour calculer des gradients de vitesse horizontaux à partir des images successives capturées par la caméra. Dans ce mode de réalisation non limitatif de l'invention, la détection de mouvements est basée sur la détection de gradient. Les gradients maximaux horizontaux détectés à l'endroit où se produit une perte de détection du visage de l'utilisateur, indiquent que le mouvement de rotation aller est en cours. En effet, à cet endroit, la détection du gradient maximum horizontal ne peut provenir que d'une rotation de la tête puisque dans le cas d'une translation, il n'y aurait pas de perte de détection du visage. De plus, les gradients maximaux indiquent une direction, qui constitue le sens du mouvement de rotation aller.

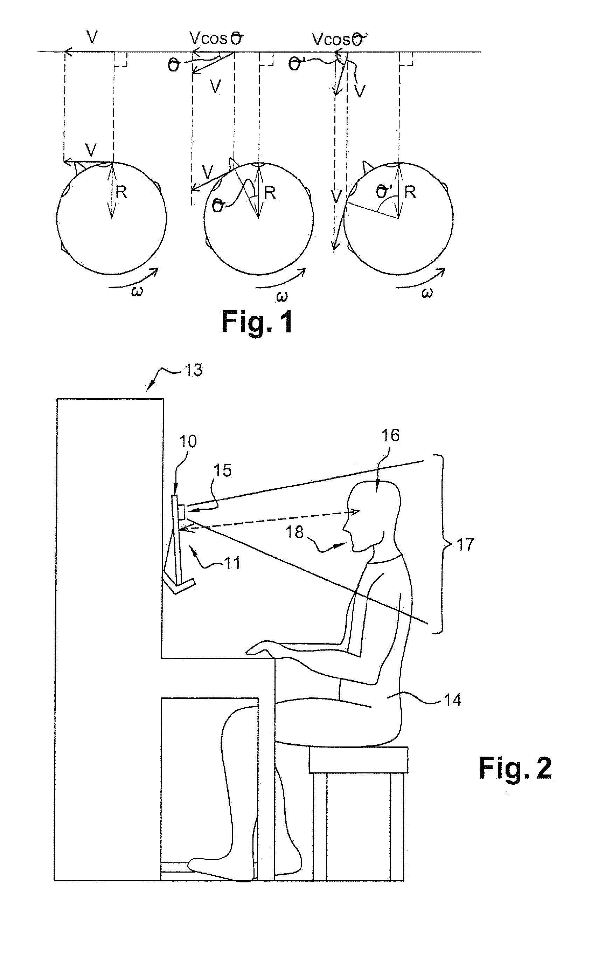

Notons que lors d'un mouvement de rotation, il existe toujours un mouvement maximal au voisinage du visage à sa dernière position détectée. En effet, considérons une vue de dessus de la tête d'un utilisateur du dispositif selon l'invention, illustrée figure 1. La tête est symbolisée par un disque de rayon R. Trois points d'intérêt qui sont à des angles différents par rapport à l'axe perpendiculaire au plan image, sont considérés. Sur la tête de gauche, le point d'intérêt est le centre du visage ; sur la tête du milieu, le point d'intérêt est le nez ; enfin sur la tête de droite, le point d'intérêt est l'oeil gauche. Si la tête tourne à une vitesse angulaire $\omega$, chaque point de la périphérie du disque admet un vecteur vitesse d'amplitude $V=R.\omega$, tangentiel à la courbure du disque et de même direction que le sens de rotation de la tête. Or, lorsque la tête est visualisée par une caméra, les vecteurs vitesse sont projetés sur le plan image de la caméra. La vitesse apparente est alors d'une amplitude $V.\cos(\theta)$, où $\theta$ est l'angle que forme l'axe tête-plan focal et le point d'intérêt sur la tête. Ainsi, la vitesse apparente horizontale varie de V (au centre de la tête) à zéro (au bord de la tête). Le mouvement de gradient maximal est donc bien centré sur le visage. Puisque les moyens de détection de visage détectent le visage jusqu'à un angle d'environ quinze degrés, un gradient de vitesse maximal est toujours détectable à la dernière position détectée du visage.

On pourrait arguer qu'en réalité lors d'une rotation de la tête, le mouvement de rotation est accompagné d'un mouvement de translation dans le sens du mouvement (dû à la torsion du cou et à l'inclinaison des épaules). Cela ne contredit en rien le principe de présence du mouvement maximal à la dernière position détectée, puisque la reconnaissance du visage suit ce mouvement de rotation/translation jusqu'à un angle de rotation du visage d'environ quinze degrés.

On note par ailleurs que la largeur seule des gradients est considérée, c'est-à-dire la composante horizontale des gradients. Cela permet :

○ d'ignorer les forts gradients verticaux correspondant à des mouvements de tête vers le haut ou vers le bas,
○ d'ignorer des mouvements latéraux trop faibles, donc pas réellement significatifs d'un mouvement de rotation.

- les moyens de détection de mouvements sont adaptés pour détecter un mouvement de rotation aller lorsque :

○ le premier décompteur est déclenché, et
○ il existe une intersection entre :

■ un premier cercle centré sur le visage de l'utilisateur à sa dernière position détectée par les moyens de détection de visage, et de diamètre sensiblement égal à la largeur du visage, et
■ un deuxième cercle centré sur l'origine du gradient maximal calculé, et de rayon proportionnel à la norme dudit gradient maximal.

Ainsi, une condition de détection du mouvement de rotation aller est que la zone du visage à sa dernière position détectée soit en intersection avec la zone de mouvement de gradient maximal. Le calcul d'intersection est effectué entre le premier cercle et le deuxième cercle. L'utilisation d'un deuxième cercle dont le rayon dépend de la norme du gradient, a comme vertu de prendre en compte la distance (en pixels) issue de la vitesse de rotation. Ainsi, plus la vitesse est grande, plus l'écart entre la dernière zone du visage détecté et la zone où est détecté le gradient quand le visage n'est plus détecté, est important. Il est donc nécessaire de pondérer le rayon par la norme du gradient afin que les conditions de recouvrement (implémentées par l'intersection du premier et du deuxième cercle) soient réunies.

- Le dispositif est adapté pour :

○ déclencher un deuxième décompteur lorsqu'un mouvement de rotation aller est détecté ;
○ détecter un mouvement de rotation retour avant l'expiration dudit deuxième compteur.

Ainsi, le dispositif ne tente de détecter un mouvement de rotation retour que tant que le deuxième décompteur n'est pas expiré. De plus, les mouvements sans retour sont éliminés par l'expiration du deuxième décompteur.

- le deuxième décompteur est déclenché lorsqu'en outre le gradient maximal calculé est de norme supérieure à une valeur seuil. Ainsi, un mouvement latéral trop faible est ignoré car il n'est pas réellement significatif d'un mouvement de rotation. De plus, seuls des mouvements de rotation suffisamment francs sont ainsi pris en considération.

- le dispositif comporte un écran adapté pour afficher les moyens de signalisation et un résultat de l'instruction logicielle. Dans ce mode de réalisation non limitatif, le dispositif est pourvu d'un écran. Afficher les moyens de signalisation sur l'écran est particulièrement ergonomique pour l'utilisateur. De plus, l'écran est aussi adapté pour afficher le résultat de l'instruction logicielle, par exemple un changement de page d'un document électronique, un affichage de figure, etc.

- l'écran est adapté pour afficher un document numérique, et l'instruction logicielle est une instruction de changement de page dudit document numérique. Ce mode de réalisation est particulièrement adapté (si ledit document électronique est une partition) pour les musiciens lisant une partition électronique affichée sur l'écran du dispositif, et ne disposant pas de leurs mains pour changer la page de la partition. Il est aussi particulièrement adapté à toutes les activités dans lesquelles un utilisateur ne dispose pas de ses mains, et lit un document électronique affiché sur l'écran, tel un magazine, un document technique, une recette de cuisine, etc.

- Le dispositif est une tablette numérique équipée d'une caméra frontale intégrée. Ceci est le mode de réalisation préféré. Cependant, tous les dispositifs standard grand public équipés d'une caméra frontale intégrée, sont envisageables. C'est le cas des tablettes numériques, des ordinateurs portables, des « smartphones », etc, ne disposant pas nécessairement d'une grande capacité de calcul. Ainsi, aucun accessoire supplémentaire n'est nécessaire.

L'invention et ses différentes applications seront mieux comprises à la lecture de la description qui suit et à l'examen des figures qui l'accompagnent.

## BREVE DESCRIPTION DES FIGURES

Les figures ne sont présentées qu'à titre indicatif et nullement limitatif de l'invention. Les figures montrent :

- à la figure 1, une vue de dessus de la tête d'un utilisateur d'un dispositif selon un mode de réalisation de l'invention, en mouvement de rotation vers la gauche ;
- à la figure 2, une représentation schématique d'un cas d'utilisation d'un dispositif selon un mode de réalisation de l'invention, posé sur un pupitre de piano ;
- à la figure 3, une représentation détaillée d'un dispositif selon un mode de réalisation de l'invention, affichant une partition pour piano ;
- à la figure 4, une représentation fonctionnelle d'un dispositif selon un mode de réalisation de l'invention ;
- à la figure 5, un organigramme illustrant le principe général de fonctionnement d'un dispositif selon un mode de réalisation de l'invention ;
- à la figure 6, une représentation schématique d'un tampon d'historique dans lequel sont enregistrés les orientations des mouvements réalisés par un utilisateur d'un dispositif selon un mode de réalisation de l'invention ;
- à la figure 7, un organigramme détaillant le principe de détection d'un mouvement de rotation aller par un dispositif selon un mode de réalisation de l'invention ;
- à la figure 8, un organigramme détaillant le principe de détection d'un mouvement de rotation retour par un dispositif selon un mode de réalisation de l'invention.

## DESCRIPTION DETAILLEE D'AU MOINS UN MODE DE REALISATION DE L'INVENTION

Sauf précision contraire, un même élément apparaissant sur des figures différentes présente une référence unique.
Le dispositif selon l'invention trouve une application particulière, mais non limitative, dans le changement de page d'une partition électronique affichée sur un écran d'une tablette numérique équipée d'une caméra intégrée frontale. Ce mode de réalisation particulier est détaillé ci-après. Il est entendu que la présente invention est susceptible de nombreuses variantes, et n'est pas limitée au mode de réalisation ci-après décrit. En effet, on note que le dispositif selon l'invention est plus généralement adaptable à tous types d'applications dans lesquelles un utilisateur souhaite déclencher une instruction logicielle par détection d'un mouvement de tête. Le dispositif peut également être implémenté sur un dispositif autre qu'une tablette numérique, tel un ordinateur portable, un « smartphone », etc, dont les avantages sont d'être des produits standard grand publics équipés de caméras frontales intégrées, ne nécessitant aucun accessoire supplémentaire.

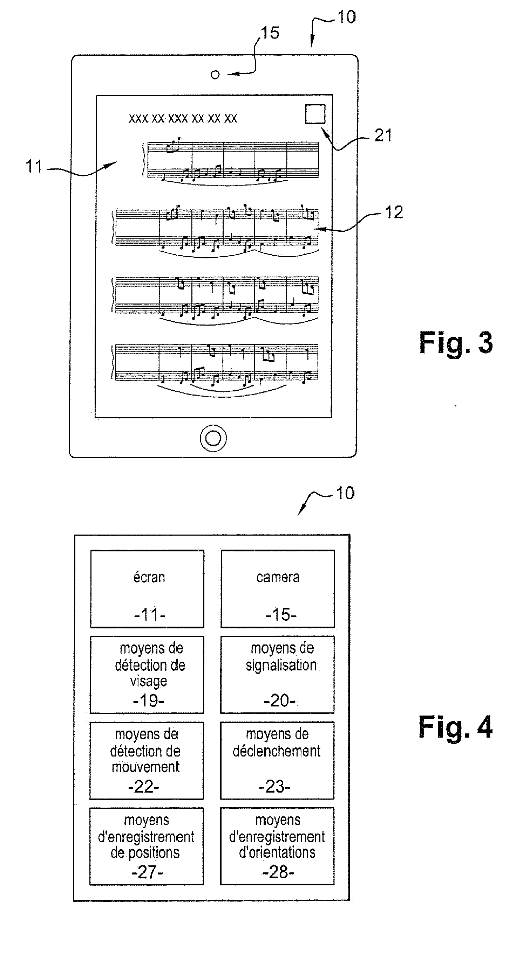

Les figures 2 et 3 représentent un dispositif 10 selon l'invention, dont l'écran 11 affiche une partition 12 pour piano 13. Le dispositif 10 est posé sur le pupitre dudit piano 13. Un utilisateur 14, ici un pianiste souhaitant exécuter la partition 12, est assis devant le piano 13, face à l'écran 11, et lit la partition 12. Une caméra 15 frontale intégrée capture des images successives de l'utilisateur 14. La caméra 15 est placée sur une partie supérieure du dispositif 10, dont l'écran 11 est orienté en mode portrait. L'emplacement de la caméra 15 peut différer dans d'autres modes de réalisation, l'important étant qu'elle soit fixe et que l'utilisateur 14 puisse lui faire face.

Dans le mode de réalisation décrit ici, le présent dispositif 10 vise à détecter un mouvement de rotation de la tête 16 de l'utilisateur 14 :

- vers la droite pour avancer d'une page la partition 12,
- vers la gauche pour reculer d'une page.

On note qu'un paramétrage inverse est possible.

Dans le mode de réalisation décrit ici, le dispositif 10 s'appuie sur deux méthodes connues dans le domaine de la reconnaissance de forme et de la détection de mouvement :

- la détection de visage (en anglais « face detection » [Viola 2001]) qui sert ici à détecter un visage sensiblement de face dans de très larges conditions d'utilisation, basée sur le principe des « haar-cascades », et
- la détection de mouvement (en anglais « motion template » [Davis and Bobick 1997]) qui permet de détecter un mouvement dans une zone donnée de l'image, basé sur le principe de la détection de gradient lors d'un mouvement de translation.

Il est entendu que, dans d'autres modes de réalisation, d'autres méthodes de détection de visage et/ou de détection de mouvements peuvent être utilisées.

Les grands principes du « motion template » sont rappelés ci-dessous :

- Une image acquise par la caméra 15 à un instant est comparée à l'image acquise à l'instant précédent. La valeur absolue de la différence entre ces deux images est calculée.
- Un seuil de détection (paramétrable) permet de dresser une carte binaire des silhouettes en mouvement.
- Une image d'historique de mouvement, que l'on notera I dans la suite de la description, est construite. Cette image accumule les cartes binaires des silhouettes détectées en fonction de l'instant d'observation. La dernière zone détectée est donc associée à des valeurs de pixels égales à t, la région détectée à l'observation précédente est quant à elle représentée avec des pixels de valeur $t-\Delta t$ ($\Delta t$ étant la période d'acquisition ou en anglais « time stamp ») et ainsi de suite. L'image d'historique de mouvement est donc une image dont les pixels ont pour valeur $t-n\Delta t$, avec n un entier naturel.
- La détection de mouvement se fait en appliquant un gradient sur cette image d'historique de mouvement. Dans la suite de la description, ce gradient sera noté $\nabla I$.

Le dispositif 10 selon un mode de réalisation de l'invention est fonctionnellement illustré à la figure 4, et comporte :

- l'écran 11 adapté pour afficher la partition 12.
- la caméra 15 adaptée pour capturer des images successives de l'utilisateur 14 lorsque celui-ci est situé dans le champ 17 de ladite caméra 15.
- des moyens de détection de visage 19 dudit utilisateur 14 lorsque son visage 18 est positionné sensiblement face à la caméra 15.
- des moyens de signalisation 20 permettant d'indiquer en continu à l'utilisateur 14 si son visage 18 est détecté au moyen de signaux lumineux 21 colorés. Un signal lumineux 21 vert, par exemple, indique à l'utilisateur 14 que son visage 18 est détecté et que s'il exécute une rotation de la tête 16, la page de la partition 12 affichée sur l'écran 11 sera changée. Un signal lumineux 21 rouge, par exemple, indique que le visage 18 n'est pas détecté. Les signaux lumineux 21 indiquent à l'utilisateur 14 que celui-ci se trouve, ou non, dans les conditions nécessaires à la reconnaissance du mouvement de tête qu'il souhaite effectuer.
- des moyens d'enregistrement 27 des positions successives du visage 18 détecté par les moyens de détection de visage 19.
- des moyens de détection de mouvements 22 dudit utilisateur 14, aptes à détecter :

○ sur chaque image successive capturée par la caméra 15, l'orientation d'un mouvement général de l'utilisateur 14 ;
○ un mouvement de rotation de la tête 16 de l'utilisateur 14 dans un sens de rotation aller, dit mouvement de rotation aller, lorsqu'une perte de détection du visage 18 se produit ;
○ un mouvement de rotation de ladite tête 16 dans un sens de rotation retour opposé au sens de rotation retour, dit mouvement de rotation retour ;

- des moyens d'enregistrement 28 des orientations des mouvements généraux de l'utilisateur 14. Lesdits moyens d'enregistrements permettent de stocker les orientations dans un tampon d'historique 24 qui sera décrit plus loin.
- des moyens de déclenchement 23 d'une instruction logicielle lorsque :

○ un mouvement de rotation aller et un mouvement de rotation retour ont été successivement détectés, et
○ au moins un premier nombre de mouvements généraux dans le sens de rotation aller, suivis d'au moins un deuxième nombre de mouvements généraux dans le sens de rotation retour, ont été successivement détectés.

Le principe général de fonctionnement du dispositif 10 est le suivant :

- selon une première étape :

En position initiale, l'utilisateur 14 fait face à la caméra 15. La tête 16 de l'utilisateur ne doit en particulier pas être baissée pour que les moyens de détection de visage 19 puissent détecter le visage 18 de l'utilisateur 14.

- selon une deuxième étape :

Lorsque les signaux lumineux 21 indiquent à l'utilisateur 14 que son visage 18 a bien été détecté par les moyens de détection de visage 19, l'utilisateur amorce un mouvement de rotation aller. L'algorithme de détection de visage 19 ne détectant que les visages de face, une perte de détection du visage 18 de l'utilisateur 14 se produit lorsque l'angle de rotation de la tête 16 atteint environ quinze degrés. Cet angle est aisément atteint lorsque le mouvement de rotation est suffisamment franc. On note que le mouvement doit durer suffisamment longtemps pour ne pas être confondu avec un mouvement naturel de l'utilisateur 14 (par exemple celui d'un pianiste lors de l'exécution d'un morceau de musique). Un mouvement d'une durée moyenne de 1,6 secondes est idéalement envisagé. Cependant, le mouvement ne doit pas durer trop longtemps (idéalement moins de deux secondes), pour qu'il reste naturel à l'utilisateur 14 de le réaliser.

- selon une troisième étape :

Les moyens de détection de mouvement 22 calculent les gradients de vitesse sur les images capturées par la caméra 15. Les gradients maximaux horizontaux détectés à l'endroit le plus récent où se trouvait la tête 16 de l'utilisateur 14 indiquent que la rotation de la tête 16 est en cours. En effet, à cet endroit, la détection du gradient maximum horizontal ne peut provenir que de la rotation de la tête 16. Ces gradients indiquent une direction, qui constitue le sens du mouvement aller de rotation.

- selon une quatrième étape :

Lorsque la tête 16 revient dans sa position initiale, le mouvement inverse retour est détecté lorsqu'un mouvement de sens inverse au mouvement de rotation aller est détecté grâce au calcul de l'orientation du mouvement général comme expliqué précédemment.

- selon une cinquième étape :

Les directions successives du mouvement étant enregistrées par les moyens d'enregistrement 21, lorsqu'ont été enregistrés un nombre suffisant de mouvements aller suivis d'un nombre suffisant de mouvements retour dans le sens opposé, on considère qu'il y a eu rotation franche de la tête 16. La direction des mouvements aller et retour indique le sens de rotation du mouvement.

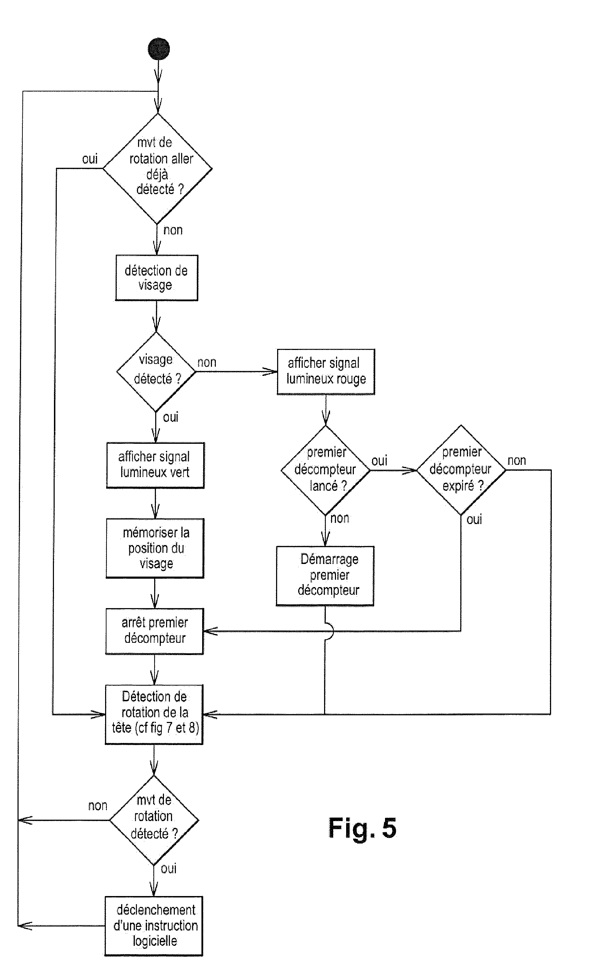

La figure 5 est un organigramme illustrant le principe général de fonctionnement du dispositif 10, selon un mode de réalisation non limitatif de l'invention.
Le principe général est le suivant :

- Si un mouvement de rotation aller n'a pas déjà été détecté, les moyens de détection de visage 19 cherchent à détecter le visage 18.

  ○ Si le visage 18 est détecté, alors le signal lumineux 21 vert est affiché, et la position du visage 18 est enregistrée. Les moyens de détection de mouvements 22 cherchent alors à détecter un mouvement de rotation.
  ○ Si le visage 18 n'est pas détecté, alors le signal lumineux 21 rouge est affiché. Si un décompteur nommé « premier décompteur » n'est pas lancé, alors il est lancé. Tant que le premier décompteur n'est pas expiré les moyens de détection de mouvements 22 cherchent alors à détecter un mouvement de rotation retour.

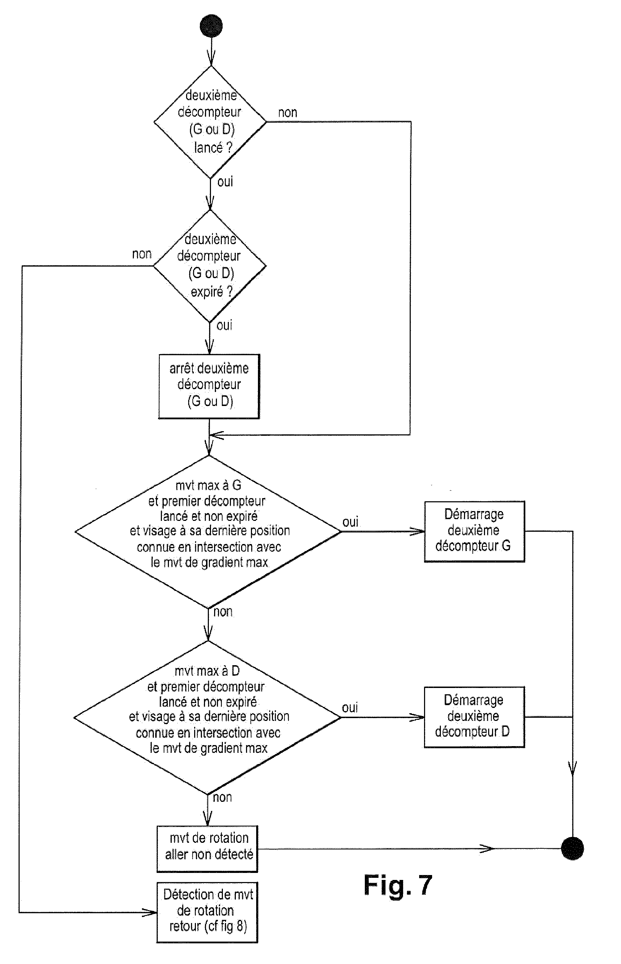

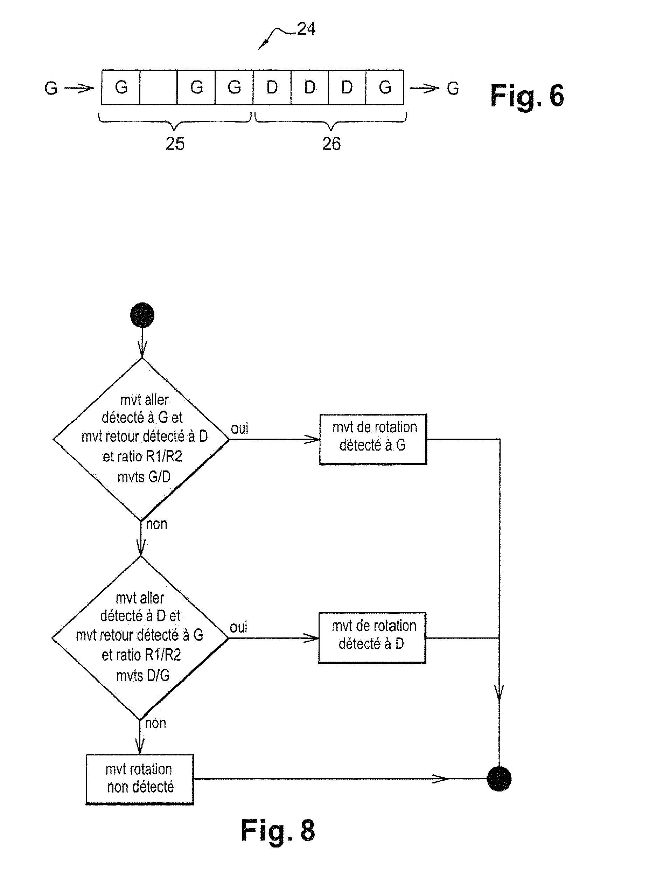

- Si un mouvement de rotation aller a déjà été détecté, alors les moyens de détection de mouvements 22 cherchent à détecter un mouvement de rotation.
- La détection de mouvement retour est détaillée aux figures 7 et 8.

Puis, si un mouvement de rotation est détecté, alors un changement de page est déclenché. Dans tous les cas, le processus recommence.

On note que :

- Au moins une nouvelle image est acquise par la caméra 15 à chaque itération. Cependant, la détection de mouvement et la détection de visage ne sont pas forcément réalisées sur la même image, mais peuvent être réalisées sur deux images successives. Par exemple, une image peut être utilisée pour la détection de visage, et l'image suivante pour la détection de mouvements.
- Au moins une alimentation de l'image d'historique des mouvements est effectuée par itération. On note que la fréquence d'alimentation est un paramètre du dispositif.
- Le premier décompteur permet de compter à partir de quand le visage 18 n'est plus détecté par les moyens de détection de visage 19. Le lancement de ce premier décompteur conditionne ainsi la détection du mouvement de rotation aller pendant la phase de détection de mouvement. Au bout d'un certain temps paramétrable, le premier décompteur arrive à expiration. Cette disposition permet d'éviter des fausses détections correspondant à des mouvements de rotation trop lents.
- A partir du moment où le visage 18 n'est plus détecté et que le mouvement de rotation aller est détecté, les moyens de détection de visage 19 ne tentent plus de détecter le visage 18 pendant le temps moyen d'exécution du mouvement de rotation, ceci afin :

  ○ de ne pas recalculer prématurément une nouvelle position du visage 18 qui perturberait le dispositif 10, et
  ○ d'améliorer les performances du dispositif 10.

Lors de la phase de détection de rotation de la tête 16, à chaque itération :

- Le gradient maximal horizontal est calculé à l'aide de la méthode des « motion templates ».
- Son orientation (gauche, droite ou indéterminée) est calculée à partir de l'angle du gradient. Le calcul de l'orientation à partir de l'angle fait partie des paramètres ajustables du dispositif 10.
- Cette orientation est historisée en deux parties dans un tampon historique 24, illustré schématiquement à la figure 6.

Les orientations alimentent le tampon 24 de la gauche vers la droite selon la méthode FIFO. Le nombre d'éléments contenus dans le tampon 24 est déterminé pour correspondre au nombre de mouvements généraux enregistrés pendant la durée moyenne d'un mouvement de rotation complet. A l'issue de la détection du mouvement retour, on examine le contenu du tampon 24.

On considère qu'une moitié droite 26 du tampon 24 correspond aux mouvements enregistrés pendant le mouvement de rotation aller, et une moitié gauche 25 à ceux enregistrés pendant le mouvement de rotation retour. Le dispositif 10 considère qu'il y a eu rotation effective de la tête si en plus des conditions de rotation aller et de rotation retour, il y a eu au moins un certain nombre de mouvements dans la direction du sens de rotation aller enregistrés dans la partie droite 26 du tampon 24, et au moins un certain nombre de mouvements dans la direction du sens de rotation retour enregistrés dans la partie gauche 25 du tampon 24. Il faut savoir que dans la pratique il y a moins de mouvements retour enregistrés, la tête revenant plus vite en position faciale.

Dans un mode de réalisation, un ratio d'au moins R1=soixante-quinze pourcents de mouvements aller et un ratio d'au moins R2=cinquante pourcents de mouvements retour, ont été choisis. Sur l'exemple de la figure 6, cela correspond à trois mouvements sur quatre pour la partie aller, et deux sur quatre pour la partie retour. Les conditions étant réunies, le contenu du tampon 24 correspond à une rotation effective de la tête à droite. Il est à noter que ces ratios font partie des paramètres ajustables du dispositif.

On notera que certaines activités ne sont pas représentées sur l'organigramme de la figure 5. Cela est également le cas pour les organigrammes des figures 7 et 8 décrites ci-après. Les étapes de calcul de l'orientation du mouvement général et l'alimentation du tampon d'historique 24 à l'aide de cette valeur ne sont notamment pas représentées.

La figure 7 représente un organigramme détaillant le principe de détection du mouvement de rotation aller.

Le principe est le suivant : si un décompteur nommé « deuxième décompteur gauche » ou « deuxième décompteur droite » est lancé, et n'est pas expiré, alors le dispositif cherche à détecter le mouvement de rotation retour. La détection de mouvement retour est détaillée à la figure 8. Si le deuxième décompteur n'est pas lancé, ou si le deuxième décompteur est expiré et arrêté, alors (cf figure 8) :

- Si un mouvement de rotation aller dans le sens gauche a été détecté (désigné sur l'organigramme par « Mvt max à G »), que le premier décompteur est lancé et non expiré, et que le visage à sa dernière position connue est en intersection avec le gradient maximal, alors un décompteur nommé « deuxième décompteur gauche » est lancé. La condition d'intersection est expliquée dans les paragraphes suivants.
- Si un mouvement de rotation aller dans le sens droite a été détecté (désigné sur l'organigramme par « Mvt max à D »), que le premier décompteur est lancé et non expiré, et que le visage à sa dernière position connue est en intersection avec le gradient maximal, alors un décompteur nommé « deuxième décompteur droite » est lancé. La condition d'intersection est expliquée dans les paragraphes suivants.
- Sinon, le dispositif considère que le mouvement de rotation aller n'a pas eu lieu, le processus recommence.

Une condition pour que le deuxième décompteur gauche ou le deuxième décompteur droite soit lancé, est qu'il existe une intersection entre :

- un premier cercle centré sur le visage 18 de l'utilisateur 14 à sa dernière position détectée par les moyens de détection de visage 19, et de diamètre sensiblement égal à la largeur du visage 18, et
- un deuxième cercle centré sur l'origine du gradient maximal calculé, et de rayon proportionnel à la norme dudit gradient maximal.

Cette condition d'intersection est symbolisée par « visage à sa dernière position connue en intersection avec le mvt de gradient max » sur l'organigramme de la figure 7. Ainsi, une condition de détection du mouvement de rotation aller est que la zone du visage 18 à sa dernière position détectée soit en intersection avec la zone de mouvement de gradient maximal. Le calcul d'intersection est effectué au moyen du premier cercle et du deuxième cercle. L'utilisation d'un deuxième cercle dont le rayon dépend de la norme du gradient, a comme vertu de prendre en compte la distance (en pixels) issue de la vitesse de rotation. Ainsi, plus la vitesse est grande, plus l'écart entre la dernière zone du visage 18 détecté et la zone où est détecté le gradient quand le visage 18 n'est plus détecté, est important. Il est donc nécessaire de pondérer le rayon par la norme du gradient afin que les conditions de recouvrement (implémentées par l'intersection du premier et du deuxième cercle) soient réunies.

Supposons qu'un gradient significatif $\nabla I(i,j)$ ait été détecté à la position (i, j) sur l'image d'historique de mouvements I. Il est nécessaire d'évaluer sa position par rapport à la dernière position mémorisée de la tête 16 pour savoir si le gradient significatif appartient à la tête 16 ou non. L'évaluation relative des positions du gradient maximal et de la tête 16 est implémentée par le test d'intersection du premier et du deuxième cercle. Le calcul du rayon du cercle de gradient $R_{Gradient}$ est calculé comme suit :

Dans un mode de réalisation, le premier cercle est modélisé par un cercle de position ($x_{visage}$, $y_{visage}$) et de rayon $R_{visage}$ (en pixels). Le rayon du gradient maximal, pour être proportionnel à $R_{visage}$, est défini à partir de la valeur de $\nabla I(i,j)$ à laquelle on normalise l'influence temporelle. Le rayon est alors défini par :

$$R_{Gradient} = K \times \frac{\nabla I}{4\Delta t} \times R_{visage,}$$

où K est un facteur de proportionnalité qui fait partie des paramètres ajustables du dispositif 10, et $4\Delta t$ la valeur du gradient typique relative à un mouvement horizontal. La façon dont ce gradient typique est déterminé, est présentée dans les paragraphes suivants.

Un voisinage local d'une image d'historique I à la position (i, j) est considéré ci-après. En considérant l'origine du système de coordonnées en haut à gauche de l'image, les pixels sont indicés de la façon suivante :

$$(i-1,j-1) \quad (i-1,j) \quad (i-1,j+1)$$

$$(i,j-1) \quad\quad (i,j) \quad\quad (i,j+1)$$

$$(i+1,j-1) \quad (i+1,j) \quad (i+1,j+1)$$

En considérant un mouvement de rotation vers la droite, l'image d'historique I de mouvements contient des régions (silhouettes) caractérisant la translation apparente vers la gauche. Dans le voisinage du point (i, j), la valeur des pixels peut s'agencer typiquement de la façon suivante :

$$t \quad t-\Delta t \quad t-\Delta t$$

$$t \quad t-\Delta t \quad t-\Delta t$$

$$t \quad\quad t \quad\quad t-\Delta t$$

Le gradient utilisé est un gradient de Sobel de taille 3x3, dont le noyau est défini dans sa composante horizontale comme suit :

$$G = \begin{bmatrix} -1 & 0 & 1 \\ -2 & 0 & 2 \\ -1 & 0 & 1 \end{bmatrix}$$

Ainsi, lors du filtrage par convolution de l'image d'historique I de mouvement, au bord d'une silhouette de mouvement associée à l'instant t-$\Delta$t, la valeur du gradient au point (i, j) s'exprime de la façon suivante :

$$\nabla I(i, j) = \sum_k \sum_l \; I(i-k, j-l) \times G(k, l)$$

$$= [I(i-1, j-1)- I(i-1, j+1)] + 2\times[ \, I(i, j-1) - I(i, j+1)] + [I(i+1, j-1)- I(i+1, j+1)]$$

$$= (\Delta t) + 2(\Delta t) + (\Delta t)$$

$$= 4(\Delta t)$$

Ainsi, le gradient horizontal a pour valeur absolue 4$\Delta$t. Plus généralement, elle est de l'ordre de 4n$\Delta$t si les différentes silhouettes de l'image d'historique de mouvement ont pour valeur t-n$\Delta$t, où n est un entier naturel. On retiendra donc qu'un mouvement de translation horizontale est caractérisé par un gradient de valeur absolue proportionnelle à 4$\Delta$t.

A titre indicatif, sur un prototype tournant sur une tablette numérique, et dans un contexte d'utilisation où la tablette est posée sur le pupitre du piano (la distance entre la tablette et la tête 16 de l'utilisateur 14 est d'environ quarante-cinq centimètres), et où la fréquence d'alimentation $\Delta$t vaut un quinzième de seconde (l'image d'historique des mouvements est alimentée quinze fois par seconde), le rayon $R_{visage}$ vaut en moyenne cent-quinze pixels. A partir de ces valeurs, la valeur de K a été fixée à :

$$K = \frac{1}{15 \times 115},$$

ce qui donne pour valeur de $R_{Gradient}$ :

$$R_{Gradient} = \frac{\nabla I}{4}.$$

La figure 8 représente un organigramme détaillant le principe de détection du mouvement de rotation retour. Le principe est le suivant :

- si un mouvement de rotation aller et un mouvement de rotation retour ont été successivement détectés, et
- si au moins un certain nombre (R1=soixante-quinze pourcents, dans un mode d'implémentation possible) de mouvements dans la direction du sens de rotation aller, et au moins un certain nombre (R2=vingt-cinq pourcents dans ledit mode d'implémentation) de mouvements dans la direction du sens de rotation retour ont été enregistrés dans le tampon d'historique 24 décrit et expliqué à la figure 6,

alors le dispositif 10 considère qu'un mouvement de rotation a été détecté. Les moyens de déclenchement 23 d'un changement de page entrent alors en oeuvre pour déclencher ledit changement de page (ou plus généralement pour déclencher l'instruction logicielle).
On constate que :

- Aucun décompteur n'est pris en considération, puisqu'on ne s'intéresse au mouvement de rotation retour que si le premier décompteur et le deuxième décompteur ne sont pas expirés.
- Les ratios sont fournis à titre indicatif et font partie des paramètres ajustables du système.
- Lorsque le mouvement de rotation est détecté, à la fin du traitement, les informations de mouvement détecté à gauche ou à droite (en particulier les décompteurs) et le tampon de mémorisation de l'orientation des mouvements sont réinitialisés.

Dans un mode de réalisation préféré, le dispositif 10 selon l'invention est adapté pour éliminer de fausses détections au moyen des dispositions suivantes, qui peuvent être considérées individuellement ou combinées selon toutes les combinaisons techniquement possibles :

- Les moyens de détection de mouvement 22 sont adaptés pour détecter des mouvements dans une partie seulement de l'image capturée par la caméra 15. Ainsi, les gradients de vitesse sont recherchés dans une zone éliminant la partie du dessus et la partie du dessous du visage 18. Cela permet d'éviter de détecter un mouvement de gradient maximum dans cette zone qui n'a pas de rapport avec la tête 16 de l'utilisateur 14.
- La largeur seule des gradients, c'est-à-dire la composante horizontale, est considérée. Cela permet d'ignorer les forts gradients verticaux correspondant à des mouvements vers le haut ou vers le bas. Par ailleurs, une largeur de gradient inférieure à un certain seuil permet d'ignorer des mouvements latéraux trop faibles, qui ne sont pas significatifs d'un mouvement de rotation.
- Les mouvements effectués alors que le visage 18 n'est pas à nouveau détecté après un certain temps, sont éliminés, grâce à l'expiration du premier décompteur.
- Les mouvements sans retour sont éliminés grâce à l'expiration du deuxième décompteur.

On note que dans un mode de réalisation possible, les moyens de déclenchement d'un changement de page sont actifs uniquement lorsque le sens de rotation aller correspond à un sens prédéfini. Ainsi, le dispositif 10 est paramétré pour ne pas déclencher de changement de page dans certaines conditions. Cela permet par exemple une lecture de la partition sans retour arrière, si le dispositif 10 est paramétré pour ne pas déclencher le changement de page sur détection des rotations à gauche, limitant ainsi les risques de déclenchement suite à une fausse détection.
Dans un mode de réalisation préféré, le dispositif 10 selon l'invention comporte les dispositions suivantes, qui, considérées individuellement ou combinées selon toutes les combinaisons techniquement possibles, visent à améliorer la détection de visage et/ou de mouvements :

- Les moyens de détection de visage 19 sont adaptés pour gérer correctement les agrandissements (en anglais « zooms ») avant/arrière du visage face à la caméra 15, si cela est nécessaire.
- Le dispositif 10 pourrait fonctionner lorsque plusieurs visages se trouvent devant la caméra : en effet, le système est tout à fait compatible avec la reconnaissance de plusieurs visages. Toutefois, lorsque l'on souhaite que le dispositif 10 ne détecte qu'un seul visage, et que plusieurs visages sont détectables, les moyens de détection de visage 19 sont adaptés pour détecter le plus gros visage. Cela permet de faire fonctionner le dispositif 10 même si des personnes (des spectateurs par exemple) se trouvent dans le champ de la caméra 15, derrière l'utilisateur 14.
- Les moyens de détection de visage 19 et/ou les moyens de détection de mouvements fonctionnent sur des images en niveaux de gris, ce qui améliore la fiabilité du dispositif 10, en particulier vis-à-vis de variations de lumière.

Pour conclure, le dispositif revendiqué présente de nombreux avantages :

- Les moyens de détection de visage ne fonctionnent que si le visage est sensiblement de face. Un visage penché vers le bas (par exemple un pianiste qui regarde ses mains) ne sera pas détecté, ce qui évite les détections de rotation de tête, tête penchée.
- Le dispositif fonctionne avec tous types d'utilisateurs, que ce soit un pianiste comme c'est le cas dans le mode de réalisation décrit, ou un trompettiste, etc. La couleur de peau ou le physique de l'utilisateur n'entre pas en compte. Le port de lunettes par l'utilisateur n'empêche pas le fonctionnement du dispositif.
- Le dispositif est paramétré de sorte à empêcher des détections sur certains mouvements à gauche, à droite, en haut ou encore en bas, et conclut à une fausse détection si un mouvement de rotation n'est pas suffisamment franc ou d'amplitude trop faible. Ainsi, le dispositif fonctionne avec des exécutants qui bougent beaucoup, en particulier qui effectuent des mouvements de haut en bas, voire des mouvements courts de rotation qui ne doivent pas être interprétés par le dispositif.
- Le dispositif fonctionne dans tous types de conditions sonores et d'éclairage (environnement relativement sombre, lumineux...).
- Le mouvement à effectuer est discret, en effet seul un mouvement de tête suffit à déclencher l'instruction logicielle. De plus, ledit mouvement est facilement réalisable et ne perturbe pas l'activité de l'utilisateur.
- L'instruction logicielle est exécutée de manière quasiment immédiate quand le mouvement de tête a été détecté.
- Lorsque l'instruction logicielle est un changement de page d'un document numérique affiché sur l'écran 11, le dispositif permet d'avancer/reculer d'une page, selon le paramétrage des moyens de déclenchement de l'instruction logicielle. On note que pouvoir reculer d'une page résout les problématiques de reprise en fin de morceau, lorsque le document électronique est une partition de musique.
- Le dispositif fonctionne sur un matériel standard de commerce, du type tablette numérique, et ne nécessite aucun accessoire supplémentaire.

**Revendications**

1. Dispositif (10) pour le déclenchement d'une instruction logicielle, comportant :

   - une caméra (15) fixe adaptée pour capturer des images successives d'un utilisateur (14) situé dans le champ (17) de ladite caméra (15) ;
   - des moyens de détection de visage (19) dudit utilisateur (14) lorsque ledit visage (18) est positionné sensiblement face à la caméra (15) ;
   - des moyens de signalisation (20) permettant d'indiquer en continu à l'utilisateur (14) si son visage (18) est détecté ;
   - des moyens d'enregistrement (27) des positions successives du visage (18) détecté par les moyens de détection de visage (19) ;
   - des moyens de détection de mouvements (22) dudit utilisateur (14), aptes à détecter :

      ○ sur chaque image successive capturée par la caméra (15), l'orientation d'un mouvement général de l'utilisateur (14) ;
      ○ un mouvement de rotation de la tête (16) de l'utilisateur (14) dans un sens de rotation aller, dit mouvement de rotation aller, à partir du moment où une perte de détection du visage (18) se produit ;
      ○ un mouvement de rotation de ladite tête (16) dans un sens de rotation retour opposé au sens de rotation aller, dit mouvement de rotation retour ;

- des moyens d'enregistrement (28) des orientations des mouvements généraux de l'utilisateur (14) ;
- des moyens de déclenchement (23) d'une instruction logicielle lorsque :

  ○ un mouvement de rotation aller et un mouvement de rotation retour ont été successivement détectés, et
  ○ au moins un premier nombre de mouvements généraux dans le sens de rotation aller, suivis d'au moins un deuxième nombre de mouvements généraux dans le sens de rotation retour, ont été successivement détectés.

**2.** Dispositif (10) selon la revendication précédente, **caractérisé en ce qu'il** est adapté pour déclencher un premier décompteur lorsqu'une perte de détection du visage (18) de l'utilisateur (14) se produit.

**3.** Dispositif (10) selon la revendication précédente, **caractérisé en ce que** les moyens de détection de visage (19) sont inactifs tant que le premier décompteur n'est pas expiré.

**4.** Dispositif (10) selon l'une des revendications précédentes, **caractérisé en ce que** les moyens de détection de mouvements (22) sont adaptés pour calculer des gradients de vitesse horizontaux à partir des images successives capturées par la caméra (15).

**5.** Dispositif (10) selon la revendication précédente, **caractérisé en ce que** les moyens de détection de mouvements (22) sont adaptés pour détecter un mouvement de rotation aller lorsque :

  - le premier décompteur est déclenché, et
  - il existe une intersection entre :

    ○ un premier cercle centré sur le visage (18) de l'utilisateur (14) à sa dernière position détectée par les moyens de détection de visage (19), et de diamètre sensiblement égal à la largeur du visage (18), et
    ○ un deuxième cercle centré sur l'origine du gradient maximal calculé, et de rayon proportionnel à la norme dudit gradient maximal.

**6.** Dispositif (10) selon l'une des revendications précédentes, **caractérisé en ce qu'il** est adapté pour :

  - déclencher un deuxième décompteur lorsqu'un mouvement de rotation aller est détecté ;
  - détecter un mouvement de rotation retour avant l'expiration dudit deuxième compteur.

**7.** Dispositif (10) selon la revendication précédente, **caractérisé en ce que** le deuxième décompteur est déclenché lorsqu'en outre le gradient maximal calculé est de norme supérieure à une valeur seuil.

**8.** Dispositif (10) selon l'une des revendications précédentes, **caractérisé en ce qu'il** comporte un écran (11) adapté pour afficher des signaux lumineux (21) générés par les moyens de signalisation (20), et un résultat de l'instruction logicielle.

**9.** Dispositif (10) selon la revendication précédente, **caractérisé en ce que** l'écran (11) est adapté pour afficher un document numérique, et l'instruction logicielle est une instruction de changement de page dudit document numérique.

**10.** Dispositif (10) selon l'une des revendications précédentes, **caractérisé en ce qu'il** est une tablette numérique équipé d'une caméra (15) frontale intégrée.

Fig. 1

Fig. 2

Fig. 3

Fig. 4

```
                          ●
                          │
                          ▼
        ┌──────────────────────────────────────┐
        │              ◇ mvt de
  oui   │          rotation aller
◄───────┤             déjà
        │            détecté ?
        │                │ non
        │                ▼
        │          ┌──────────────┐
        │          │ détection de │
        │          │    visage    │
        │          └──────────────┘
        │                │
        │                ▼
        │          ◇ visage      non      ┌──────────────────┐
        │            détecté ? ─────────► │ afficher signal  │
        │                │                │ lumineux rouge   │
        │                │ oui            └──────────────────┘
        │                ▼                        │
        │          ┌──────────────┐               ▼
        │          │ afficher signal│      ◇ premier       oui    ◇ premier      non
        │          │ lumineux vert │       décompteur ──────────► décompteur ───────┐
        │          └──────────────┘        lancé ?               expiré ?           │
        │                │                     │ non                 │ oui          │
        │                ▼                     ▼                     │              │
        │          ┌──────────────┐      ┌──────────────┐           │              │
        │          │ mémoriser la │      │ Démarrage    │           │              │
        │          │ position du  │      │ premier      │           │              │
        │          │    visage    │      │ décompteur   │           │              │
        │          └──────────────┘      └──────────────┘           │              │
        │                │                     │                    │              │
        │                ▼                     │                    │              │
        │          ┌──────────────┐            │                    │              │
        │          │ arrêt premier │◄──────────┴────────────────────┘              │
        │          │  décompteur  │                                                │
        │          └──────────────┘                                                │
        │                │                                                         │
        │                ▼                                                         │
        │          ┌──────────────┐                                                │
        │          │ Détection de │◄───────────────────────────────────────────────┘
        │          │ rotation de la│
        │          │ tête (cf fig 7 et 8)│
        │          └──────────────┘
        │                │
        │                ▼
        │    non   ◇ mvt de
        ◄─────────  rotation
        │            détecté ?
        │                │ oui
        │                ▼
        │          ┌──────────────┐
        │          │ déclenchement│
        └──────────┤ d'une instruction│
                   │   logicielle │
                   └──────────────┘
```

## Fig. 5

16

Fig. 7

~24

G → | G | | G | G | D | D | D | G | → G

$\underbrace{\hspace{4cm}}_{25}$ $\underbrace{\hspace{3cm}}_{26}$

**Fig. 6**

mvt aller
détecté à G et
mvt retour détecté à D
et ratio R1/R2
mvts G/D

→ oui → mvt de rotation
détecté à G

non

mvt aller
détecté à D et
mvt retour détecté à G
et ratio R1/R2
mvts D/G

→ oui → mvt de rotation
détecté à D

non

mvt rotation
non détecté

**Fig. 8**

Europäisches
Patentamt

European
Patent Office

Office européen
des brevets

# RAPPORT DE RECHERCHE EUROPEENNE

Numéro de la demande

EP 13 18 2695

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 400 370 A1 (SONY COMP ENTERTAINMENT INC [JP]) 28 décembre 2011 (2011-12-28) | 1,8 | INV. G06K9/00 G06F3/01 |
| Y | * abrégé; figures 1,2,9 * ----- | 4 | |
| Y | DAVIS AND G BRADSKI J: "Real-time Motion Template Gradients using Intel CVLib", PROCEEDINGS ON THE INTERNATIONAL CONFERENCE ON COMPUTERVISION, XX, XX, 1 septembre 1999 (1999-09-01), pages 1-20, XP002331182, * abrégé * * page 7, alinéa 3.3 - page 10, alinéa 3.4 * ----- | 4 | |

| DOMAINES TECHNIQUES RECHERCHES (IPC) |
|---|
| G06K G06F |

Le présent rapport a été établi pour toutes les revendications

| Lieu de la recherche | Date d'achèvement de la recherche | Examinateur |
|---|---|---|
| La Haye | 11 septembre 2013 | Chateau, Jean-Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 2695

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2013

| Document brevet cité<br>au rapport de recherche | Date de<br>publication | Membre(s) de la<br>famille de brevet(s) | Date de<br>publication |
|---|---|---|---|
| EP 2400370 A1 | 28-12-2011 | EP 2400370 A1<br>JP 2010191826 A<br>US 2011317874 A1<br>WO 2010095190 A1 | 28-12-2011<br>02-09-2010<br>29-12-2011<br>26-08-2010 |

Pour tout renseignement concernant cette annexe : voir Journal Officiel de l'Office européen des brevets, No.12/82